# EUROPÄISCHE PATENTSCHRIFT

(11) **EP 1 021 920 B1**
(45) Veröffentlichungstag und Bekanntmachung des Hinweises auf die Patenterteilung: **07.07.2010**
(21) Anmeldenummer: 98948754.1
(22) Anmeldetag: 07.08.1998
(51) Int. Cl.: H04Q 3/66

(54) **VERFAHREN ZUR LEITWEGSUCHE IN TELEKOMMUNIKATIONSNETZEN**
METHOD FOR ROUTE SEARCHING IN TELECOMMUNICATION NETWORKS
PROCEDE DE RECHERCHE DE VOIES DANS DES RESEAUX DE TELECOMMUNICATION

(30) Priorität: 30.09.1997 DE 19743361
(43) Veröffentlichungstag der Anmeldung: 26.07.2000
(73) Patentinhaber: SIEMENS AKTIENGESELLSCHAFT, 80333 München (DE)
(72) Erfinder: WILLE, Klaus, D-81679 München (DE); STAMPFL, Robert, D-85411 Hohenkammer (DE); BLICKBERNDT, Dirk, D-81379 München (DE); FARTMANN, Alfons, D-85375 Neufahrn (DE)
(74) Vertreter: Fritzsche, Thomas
(86) Internationale Anmeldenummer: PCT/DE1998/002285
(87) Internationale Veröffentlichungsnummer: WO 1999/017561

(56) Entgegenhaltungen:
- EP-A- 0 556 515
- EP-A- 0 566 209
- EP-A- 0 616 477
- WO-A-97/31493
- US-A- 5 018 187
- GELDER VAN J ET AL: "PRIVATE NETWORKING WITH SOPHO-TBX AND SOPHOS SYSTEMS" PHILIPS TELECOMMUNICATION REVIEW, Bd. 43, Nr. 4, Dezember 1985, Seiten 237-252, XP002032868
- M.J. BELLER: "Call delivery to portable telephones away from home using the local exchange network" INTERNATIONAL CONFERENCE ON COMMUNICATIONS - PAPER 30.3, Bd. 2, 23. - 26. Juni 1991, Seiten 948-953, XP000269625 Denver (US)

## Beschreibung

Die Erfindung betrifft ein Verfahren zur Leitwegsuche von einem ersten, an ein erstes Kommunikationsnetz angeschlossenen Endgerät eines rufenden Teilnehmers zu einem Endgerät eines gerufenen Teilnehmers, wobei das Endgerät des gerufenen Teilnehmers zu dessen Adresse ein Rufaufbau vom ersten Endgerät veranlaßt wird, an einem zweiten Kommunikationsnetz angeschlossen ist und für dieses Endgerät des gerufenen Teilnehmers eine Anrufumleitung zu einem Umleitungsziel aktiviert ist.

Aus der Produktschrift der Firma Siemens AG, "System HICOM 600", Bestellnummer A19100-K3161-G430-01 ist z.B. ein Kommunikationssystem bekannt, das die Leistungsmerkmale Anrufumleitung und selbsttätige Rufweiterleitung realisiert (Seiten 29 und 38). Das Leistungsmerkmal Anrufumleitung bewirkt, daß ein Anruf, der zu einem Endgerät mit aktivierter Anrufleitung gelangt, zu einem eingestellten Zielendgerät umgeleitet wird. Aus der Produktschrift der Firma Siemens AG "HICOM 300 Networking", Bestellnummer A31001-W-A30 ist zudem bekannt, Kommunikationssysteme zu einem Netz zusammenzuschalten und lokal verfügbare Leistungsmerkmale netzweit zur Verfügung zu stellen, so daß eine Rufumleitung zu einem, diesem Netz zugeordneten Endgerät möglich ist.

Ist ein aus solchen Kommunikationssystemen bestehendes Teilnehmernetz mit einem öffentlichen Kommunikationsnetz verbunden, können Rufe von einem Endgerät, das an das Teilnehmernetz angeschlossen ist, sowohl an Endgeräte umgeleitet werden, die an das eigene Teilnehmernetz angeschlossen sind, als auch an Endgeräte, die an das öffentliche Kommunikationsnetz angeschlossen sind. Ist das Endgerät eines rufenden Teilnehmers an das öffentliche Kommunikationsnetz angeschlossen und das Endgerät eines gerufenen Teilnehmers, für das eine Anrufumleitung zu einem Umleitungsziel aktiviert ist, an das Teilnehmernetz angeschlossen, so kann eine Leitwegsuchprozedur zum Ermitteln des Leitweges zum Umleitungsziel im Teilnehmernetz oder im öffentlichen Kommunikationsnetz ausgeführt werden. Wird die Leitwegsuchprozedur im öffentlichen Kommunikationsnetz ausgeführt, so wird die Adresse des Umleitungszieles zurück zu dem Netzknoten übermittelt, dem das Endgerät des rufenden Teilnehmers zugeordnet ist. Ausgehend von diesem Netzknoten wird eine neue Verbindung zu dem Netzknoten aufgebaut, dem das Umleitungsziel zugeordnet ist.

Abhängig von der Netzzugehörigkeit der Endgeräte des rufenden Teilnehmers, des gerufenen Teilnehmers und des Umleitungszieles entstehen bei einer Ausführung der Leitwegsuchprozedur im eigenen bzw. im fremden Kommunikationsnetz unterschiedliche Kosten für einen Betreiber eines Teilnehmernetzes.

Ist das Endgerät des rufenden Teilnehmers und das Umleitungsziel dem öffentlichen Kommunikationsnetz zugeordnet und das Endgerät des gerufenen Teilnehmers dem Teilnehmernetz zugeordnet, und ist das Umleitungsziel vom Teilnehmernetz aus über den gleichen Netzübergang zu erreichen, über den der ankommende Ruf erfolgt ist, so werden bei einer Initialisierung der Leitwegsuchprozedur im eigenen Teilnehmernetz zwei Verbindungen des Netzübergangsbündels vom öffentlichen Kommunikationsnetz zum Teilnehmernetz belegt. Sind beispielsweise das Endgerät des rufenden Teilnehmers und das Umleitungsziel einem Kommunikationsnetz in Hamburg zugeordnet und ist das Endgerät des gerufenen Teilnehmers an ein Teilnehmernetz in München angeschlossen, so werden bei einem Ausführen der Leitwegsuchprozedur im Teilnehmernetz in München zwei Fernverbindungen von Hamburg nach München und umgekehrt belegt, obwohl nur eine lokale Verbindung in Hamburg benötigt werden würde. Für den Betreiber des Teilnehmernetzes entstehen somit Kosten für die Verbindung von München nach Hambung über das öffentliche Kommunikationsnetz.

Ist das Umleitungsziel dagegen dem eigenen Teilnehmernetz zugeordnet und wird die Leitwegsuchprozedur im fremden Kommunikationsnetz ausgeführt, so entstehen für den Betreiber des Teilnehmernetzes höhere Kosten als bei einer Ausführung der Leitwegsuchprozedur im eigenen Teilnehmernetz.

Um das zuletzt beschriebene Problem zu umgehen, kann im eigenen Teilnehmernetz ein Vergleich von Teilnehmer-Rufnummer-Sequenzen des Umleitungszieles mit entsprechenden Teilnehmer-Rufnummer-Sequenzen des Teilnehmernetzes vorgenommen werden. Stimmen beide Sequenzen überein, so befindet sich das Umleitungsziel im eigenen Teilnehmernetz und eine Leitwegsuchprozedur kann im eigenen Teilnehmernetz ausgeführt werden. Unterscheiden sich die Rufnummerinformationen voneinander, so sollte die Leitwegsuchpozedur im fremden Kommunikationsnetz ausgeführt werden.

Aus "In zwei Schritten zum 'Corporate Netzwerk'", telecom report 19 Heft 3, 1996, Siemens AG Berlin und München ist ein privates Kommunikationsnetz bekannt. Dieses private Kommunikationsnetz (ISDN-Netz) besteht aus mehreren Netzknoten, die jeweils eine eindeutige Knotenkennung (z.B. Knoten 3 Burda Medien) besitzen. Das Kommunikationsnetz ist über verschiedene S2M-Amtszugänge in unterschiedlichen Städten mit dem öffentlichen Kommunikationsnetz verbunden. Zusätzlich besitzt das private Kommunikationsnetz über einen GSM-Ausgang eine direkte Verbindung zu einem GSM-Mobilfunknetz (D1, D2).

Der Erfindung liegt die Aufgabe zugrunde, ein vorteilhaftes Verfahren zur Leitwegsuche anzugeben, wenn sich das Endgerät des rufenden Teilnehmers und das Umleitungsziel nicht in dem Kommunikationsnetz befinden, dem das Endgerät des gerufenen Teilnehmers zugeordnet ist.

Gelöst wird die Aufgabe, ausgehend von den Merkmalen des Oberbegriffs des Patentanspruchs 1, durch dessen kennzeichnende Merkmale.

Ein Verbindungsaufbau von einem an ein erstes Kommunikationsnetz angeschlossen rufenden Endgerät zu einem an ein zweites Kommunikationsnetz angeschlossenen gerufenen Endgerät erfolgt vom ersten Kommunikationsnetz in das zweite Kommunikationsnetz über eine erste Netzknoten-Kombination. Eine Netzknoten-Kombination besteht aus zwei über eine Leitung miteinander verbundenen und verschiedenen Kommunikationsnetzen zugeordneten Netzübergangsknoten.

Das erste und das zweite Kommunikationsnetz sind zusätzlich über mindestens eine zweite Netzknoten-Kombination miteinander verbunden, oder vom ersten Kommunikationsnetz und vom zweiten Kommunikationsnetz besteht über jeweils mindestens eine weitere Netzknoten-Kombination eine Verbindung zu einem weiteren Kommunikationsnetz.

Die Netzknoten des ersten, des zweiten und des weiteren Kommunikationsnetzes besitzen eindeutige Knotenkennungen, die üblicherweise nur jeweils im eigenen Kommunikationsnetz bekannt sind.

Ist für das gerufene Endgerät eine Rufumleitung zu einem Umleitungsziel mit Umleitungszieladresse aktiviert, wobei das Umleitungsziel einem Umleitungszielknoten im ersten oder im weiteren Kommunikationsnetz zugeordnet sein kann, wird die Verbindung ausgehend vom Zielknoten, an dem das gerufene Endgerät angeschlossen ist, in Richtung des Ursprungsknotens, an dem das rufende Endgerät angeschlossen ist, bis zu einem ersten Netzübergangsknoten der ersten Netzknoten-Kombination im zweiten Kommunikationsnetz abgebaut. In diesem werden anhand der Knotennummern der Netzknoten-Kombinationen und der Knotennummer des Umleitungszielknotens die Größe der unterschiedlichen Leitwege ausgehend von einer Netzknoten-Kombination zum Umleitungszielknoten ermittelt. Ist der Leitweg über die erste Netzknoten-Kombination zum Umleitungszielknoten kleiner als ein Leitweg über die zweite oder eine weitere Netzknoten-Kombination zum Umleitungszielknoten, so wird eine Leitwegsuchprozedur zum Ermitteln des Leitweges zum Umleitungszielknoten im ersten Kommunikationsnetz ausgeführt. Anderenfalls wird die Leitwegsuchprozedur im zweiten Kommunikationsnetz ausgeführt.

Ein wesentlicher Vorteil des erfindungsgemäßen Verfahrens besteht darin, daß bei einer Ermittlung eines Leitweges zu einem Umleitungsziel immer der Leitweg gewählt werden kann, der für den Betreiber des eigenen Netzes die kostengünstigste Alternative darstellt.

Ist das Umleitungsziel dem ersten Kommunikationsnetz zugeordnet und ist die Größe des Leitweges über die zweite Netzknoten-Kombination zum Umleitungszielknoten kleiner, als die Größe des Leitweges über die erste Netzknoten-Kombination zum Umleitungszielknoten, so wird in einer vorteilhaften Ausgestaltung des erfindungsgemäßen Verfahrens der Leitweg ausgehend vom ersten Netzübergangsknoten der ersten Netzknoten-Kombination im zweiten Kommunikationsnetz über die zweite Netzknoten-Kombination zum Umleitungszielknoten geführt.

Ist das Umleitungsziel dem weiteren Kommunikationsnetz zugeordnet und ist die Größe des Leitweges über die weitere Netzknoten-Kombination vom zweiten Kommunikationsnetz in das weitere Kommunikationsnetz zum Umleitungszielknoten kleiner als die Größe des Leitweges über die erste Netzknoten-Kombination zum Umleitungszielknoten, so wird der Leitweg ausgehend vom ersten Netzübergangsknoten der ersten Netzknoten-Kombination im zweiten Kommunikationsnetz über die weitere Netzknoten-Kombination vom zweiten Kommunikationsnetz in das weitere Kommunikationsnetz zum Umleitungszielknoten geführt.

In einer weiteren vorteilhaften Ausgestaltung des erfindungsgemäßen Verfahrens können als Kriterien für die Größe eines Leitweges, die bei dem jeweiligen Leitweg anfallenden Gebühren in einem fremden Kommunikationsnetz, die Anzahl der bei dem jeweiligen Leitweg zu durchlaufenden Netzknoten und die lokale Entfernung des Umleitungszielknotens von der jeweiligen Netzknoten-Kombination herangezogen werden.

Ein Ausführungsbeispiel der Erfindung wird im folgenden anhand der Zeichnung weiter erläutert.

Dabei zeigen:
- Fig 1: ein Strukturbild zur schematischen Darstellung von zwei Kommunikationsnetzen, die über zwei Netzübergän- ge miteinander verbunden sind;
- Fig 2: ein Beispiel eines Ablaufdiagramms der bei einer ak- tivierten Rufumleitung ablaufenden Verfahrensschrit- te.

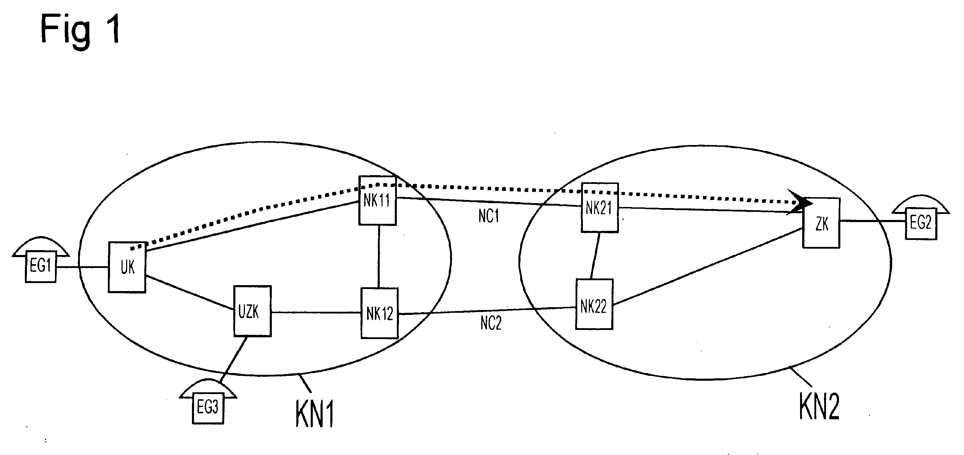

Fig 1 zeigt eine Anordnung bestehend aus zwei Kommunikationsnetzen KN1, KN2, die über zwei Netzknoten-Kombination NK11, NK21; NK12,NK22 miteinander verbundenen sind. Das erste Kommunikationsnetz KN1 (z.B. ein öffentliches Kommunikationsnetz) weist einen ersten Netzübergangsknoten NK11 und einen zweiten Netzübergangsknoten NK12 für die Verbindung mit dem zweiten Kommunikationsnetz KN2 auf. Ebenso weist das zweite Kommunikationsnetz KN2 (z.B. ein privates Teilnehmernetz) einen ersten Netzübergangsknoten NK21 und einen zweiten Netzübergangsknoten NK22 für die Verbindung mit dem ersten Kommunikationsnetz KN1 auf. Der erste Netzübergangsknoten NK11 im ersten Kommunikationsnetz KN1 ist über eine Leitung NC1 mit dem ersten Netzübergangsknoten NK21 des zweiten Kommunikationsnetzes KN2 verbunden. Der zweite Netzübergangsknoten NK12 im ersten Kommunikationsnetz KN1 ist über eine Leitung NC2 mit dem zweiten Netzübergangsknoten NK22 des zweiten Kommunikationsnetzes KN2 verbunden.

Von einem ersten, über einen Ursprungsknoten UK an das erste Kommunikationsnetz KN1 angeschlossenen Endgerät EG1, soll eine Verbindung zu einem zweiten, über einen Zielknoten ZK an das zweite Kommunikationsnetz KN2 angeschlossenen Endgerät EG2 aufgebaut werden (siehe gestrichelte Linie). Für das zweite Endgerät EG2 ist eine Rufumleitung zu einem dritten Endgerät EG3 aktiviert, das über einen Umleitungszielknoten UZK an das erste Kommunikationsnetz KN1 angeschlossen ist.

Bei dem Verbindungsaufbau vom ersten Endgerät EG1 zum zweiten Endgerät EG2 über die erste Netzknoten-Kombination NK11,NK21 zum Zielknoten ZK wird eine übermittelte Teilnehmer-Rufnummer des ersten Endgerätes EG1 im ersten Netzübergangsknoten NK21 des zweiten Kommunikationsnetzes KN2 durch eine stellvertretende Knotennummer, die den ersten Netzübergangsknoten NK11 des ersten Kommunikationsnetzes KN1 eindeutig kennzeichnet, ergänzt.

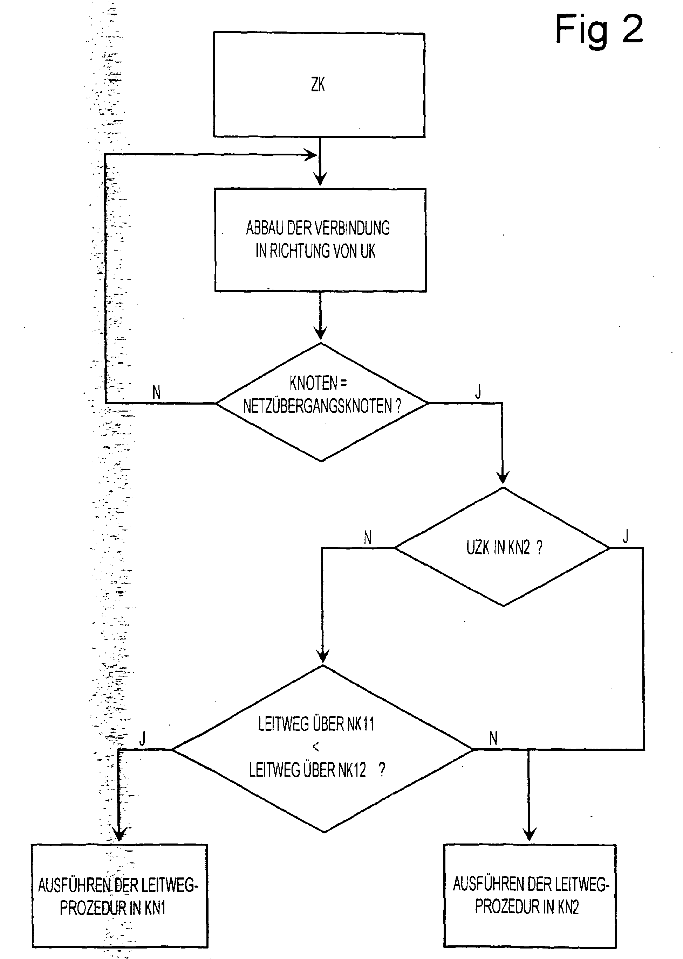

In Fig 2 werden die bei einer für das zweite Endgerät EG2 aktivierten Anrufumleitung ablaufenden Verfahrensschritte dargestellt. Ausgehend vom Zielknoten ZK wird die Verbindung zwischen dem ersten Endgerät EG1 und dem zweiten Endgerät EG2 in Richtung des Ursprungknotens UK bis zum ersten Netzübergangsknoten NK21 des zweiten Kommunikationsnetzes KN2 abgebaut. In diesem wird überprüft, ob der Umleitungszielknoten UZK dem ersten Kommunikationsnetz KN1 oder dem zweiten Kommunikationsnetz KN2 zugeordnet ist. Ist der Umleitungszielknoten UZK ein Netzknoten im zweiten Kommunikationsnetz KN2 so wird eine Leitwegsuchprozedur für den Leitweg zum Umleitungszielknoten UZK im zweiten Kommunikationsnetz KN2 durchgeführt. Ist der Umleitungszielknoten UZK ein Netzknoten im ersten Kommunikationsnetz KN1, so wird anhand der stellvertretenden Knotennummer des ersten Netzübergangsknotens NK11 des ersten Kommunikationsnetzes KN1 die Größe eines ersten Leitweges ausgehend vom ersten Netzübergangsknoten NK11 des ersten Kommunikationsnetzes KN1 zum Umleitungszielknoten UZK und anhand der stellvertretenden Knotennummer des zweiten Netzübergangsknotens NK12 des ersten Kommunikationsnetzes KN1 die Größe eines zweiten Leitweges ausgehend vom zweiten Netzübergangsknoten NK12 des ersten Kommunikationsnetzes KN1 zum Umleitungszielknoten UZK ermittelt. Ist der erste Leitweg kleiner als der zweite Leitweg so wird eine Leitwegsuchprozedur zum Ermitteln des Leitweges zum Umleitungszielknoten UKZ im ersten Kommunikationsnetz KN1 ausgeführt. Ist der erste Leitweg größer als der zweite Leitweg so wird die Leitwegsuchprozedur im zweiten Kommunikationsnetz KN2 ausgeführt.

Bei dem vorliegenden Beispiel führt der Leitweg ausgehend vom ersten Netzübergangsknoten NK21 des zweiten Kommunikationsnetzes KN2 über die zweite Netzknoten-Kombination NK12,NK22 zum Umleitungszielknoten UZK.

## Patentansprüche

1. Verfahren zur Leitwegsuche von einem rufenden, an einem ersten Kommunikationsnetz (KN1) angeschlossenen Endgerät (EG1) zu einem, an einem gerufenen Endgerät (EG2) eingestellten Umleitungsziel (EG3) mit Umleitungszieladresse,
wobei das gerufene Endgerät (EG2) an einem zweiten Kommunikationsnetz (KN2) angeschlossen ist,
wobei sowohl das erste, als auch das zweite Kommunikationsnetz (KN1, KN2) Netzknoten mit jeweils eindeutiger Knotenkennung enthalten,
und wobei eine erste Netzknoten-Kombination (NK11,NK21) für den vom rufenden Endgerät (EG1) zum gerufenen Endgerät (EG2) vorgesehenen Rufaufbau dient und mindestens eine weitere Netzknoten-Kombination (NK12,NK22) vom ersten zum zweiten Kommunikationsnetz (KN1, KN2) vorgesehen ist,
**dadurch gekennzeichnet, daß**
im zweiten Kommunikationsnetz (KN2) festgelegt wird, daß eine Leitwegsuchprozedur zu einem nicht im zweiten Kommunikationsnetz (KN2) angeordneten Umleitungsziel (EG3) im zweiten Kommunikationsnetz (KN2) ausgeführt wird, falls anhand der Umleitungszieladresse und anhand der Knotenkennungen der Netzknoten-Kombinationen (NK11,NK21; NK12,NK22) erfaßt wird, daß die Größe des Leitweges über die weitere Netzknoten-Kombination (NK12, NK22) zum Umleitungsziel (EG3) kleiner ist, wie die Größe des Leitweges über die erste Netzknoten-Kombination (NK11,NK21) zum Umleitungsziel (EG3).

2. Verfahren nach Anspruch 1,
**dadurch gekennzeichnet, daß**
mindestens eine zweite Netzknoten-Kombination vom ersten Kommunikationsnetz (KN1) zu einem weiteren Kommunikationsnetz und eine dritte Netzknoten-Kombination vom zweiten Kommunikationsnetz (KN2) zum weiteren Kommunikationsnetz vorgesehen ist, und
daß im zweiten Kommunikationsnetz (KN2) festgelegt wird, daß eine Leitwegsuchprozedur zu einem nicht im zweiten Kommunikationsnetz (KN2) angeordneten Umleitungsziel (EG3) im zweiten Kommunikationsnetz (KN2) ausgeführt wird, falls anhand der Umleitungszieladresse und anhand der Knotenkennungen der Netzknoten-Kombinationen erfaßt wird, daß die Größe des Leitweges über die dritte Netzknoten-Kombination zum Umleitungsziel (EG3) kleiner ist, wie die Größe des Leitweges über die erste Netzknoten-Kombination (NK11,NK21) zum Umleitungsziel (EG3).

3. Verfahren nach Anspruch 1,
**dadurch gekennzeichnet, daß**
falls die Leitwegsuchprozedur im zweiten Kommunikationsnetz (KN2) ausgeführt wird, der Leitweg zum Umleitungsziel (EG3) über die weitere Netzknoten-Kombination (NK12,NK22) zum Umleitungsziel (EG3) geführt wird.

4. Verfahren nach Anspruch 2,
**dadurch gekennzeichnet, daß**
falls die Leitwegsuchprozedur im zweiten Kommunikationsnetz (KN2) ausgeführt wird, der Leitweg zum Umleitungsziel (EG3) über die dritte Netzknoten-Kombination zum Umleitungsziel (EG3) geführt wird.

5. Verfahren nach einem der vorangegangenen Ansprüche,
**dadurch gekennzeichnet, daß**
die Größe eines Leitweges bestimmt wird, durch die bei einem Leitweg anfallenden Gebühren.

6. Verfahren nach einem der vorangegangenen Ansprüche,
**dadurch gekennzeichnet, daß**
die Größe eines Leitweges bestimmt wird, durch die Anzahl der Netzknoten, die bei einem Leitweg durchlaufen werden

7. Verfahren nach einem der vorangegangenen Ansprüche,
**dadurch gekennzeichnet, daß**
die Größe eines Leitweges bestimmt wird, durch die lokale Entfernung des Umleitungszieles von einer Netzknoten-Kombination.

## Claims

1. Method for route searching from a calling terminal (EG1), that is connected to a first communication network (KN1), to a redirection target (EG3), set to a called terminal (EG2), with a redirection target address,
wherein the called terminal (EG2) is connected to a second communication network (KN2),
wherein both the first and the second communication networks (KN1, KN2) contain network nodes with clear node identification respectively,
and wherein a first network node combination (NK11, NK21) is used for the call set-up provided from the calling terminal (EG1) to the called terminal (EG2) and at least one further network node combination (NK12, NK22) is provided from the first to the second communication network (KN1, KN2),
**characterised in that** it is established in the second communication network (KN2) that a route searching procedure for a redirection target (EG3) that is not arranged in the second communication network (KN2) is carried out in the second communication network (KN2), if it is detected, using the redirection target address and using the node identifications of the network node combinations (NK11, NK21; NK12, NK22), that the size of the route via the further network node combination (NK12, NK22) to the redirection target (EG3) is smaller than the size of the route via the first network node combination (NK11, NK21) to the redirection target (EG3).

2. Method according to Claim 1, **characterised in that** at least a second network node combination is provided from the first communication network (KN1) to a further communication network and a third network node combination is provided from the second communication network (KN2) to the further communication network, and
that it is established in the second communication network (KN2) that a route searching procedure for a redirection target (EG3) that is not arranged in the second communication network (KN2) is carried out in the second communication network (KN2), if it is detected, using the redirection target address and using the node identifications of the network node combinations, that the size of the route via the third network node combination to the redirection target (EG3) is smaller than the size of the route via the first network node combination (NK11, NK21) to the redirection target (EG3).

3. Method according to Claim 1, **characterised in that**, if the route searching procedure is carried out in the second communication network (KN2), the route to the redirection target (EG3) is directed via the further network node combination (NK12, NK22) to the redirection target (EG3).

4. Method according to Claim 2, **characterised in that**, if the route searching procedure is carried out in the second communication network (KN2), the route to the redirection target (EG3) is directed via the third network node combination to the redirection target (EG3).

5. Method according to one of the preceding claims, **characterised in that** the size of a route is determined through the fees incurred on a route.

6. Method according to one of the preceding claims, **characterised in that** the size of a route is determined through the number of the network nodes passed through in a route.

7. Method according to one of the preceding claims, **characterised in that** the size of a route is determined through the local distance of the redirection target from a network node combination.

## Revendications

1. Procédé de recherche de chemins allant d'un terminal appelant (EG1), raccordé à un premier réseau de communication (KN1), à une cible de réacheminement (EG3) définie pour un terminal appelé (EG2) et disposant d'une adresse de cible de réacheminement,
sachant que le terminal appelé (EG2) est raccordé à un deuxième réseau de communication (KN2),
sachant que, aussi bien le premier que le deuxième réseau de communication (KN1, KN2) contiennent des noeuds de réseau ayant chacun un indicatif de noeud univoque,
et sachant qu'une première combinaison de noeuds de réseau (NK11, NK21) sert à l'établissement de l'appel prévu du terminal appelant (EG1) au terminal appelé (EG2) et qu'il est prévu au moins une autre combinaison de noeuds de réseau (NK12, NK22) du premier au deuxième réseau de communication (KN1, KN2),
**caractérisé en ce que**
il est déterminé dans le deuxième réseau de communication (KN2) qu'une procédure de recherche de chemins vers une cible de réacheminement (EG3) non disposée dans le réseau de communication (KN2) est exécutée dans le deuxième réseau de communication (KN2) dans le cas où il est détecté à l'aide de l'adresse de la cible de réacheminement et à l'aide des indicatifs de noeuds des combinaisons de noeuds de réseau (NK11, NK21 ; NK12, NK22) que la grandeur du chemin allant à la cible de réacheminement (EG3) en passant par l'autre combinaison de noeuds de réseau (NK12, NK22) est plus courte que la grandeur du chemin allant à la cible de réacheminement (EG3) en passant par la combinaison de noeuds de réseau (NK11, NK21).

2. Procédé selon la revendication 1,
**caractérisé en ce**
**qu'**il est prévu au moins une deuxième combinaison de noeuds de réseau allant du premier réseau de communication (KN1) à un autre réseau de communication et une troisième combinaison de noeuds de réseau allant du deuxième réseau de communication (KN2) à l'autre réseau de communication, et
en ce qu'il est déterminé dans le deuxième réseau de communication (KN2) qu'une procédure de recherche de voies vers une cible de réacheminement (EG3) non disposée dans le deuxième réseau de communication (KN2) est exécutée dans le deuxième réseau de communication (KN2) dans le cas où il est détecté à l'aide de l'adresse de la cible de réacheminement et à l'aide des indicatifs de noeuds des combinaisons de noeuds de réseau que la grandeur du chemin allant à la cible de réacheminement (EG3) en passant par la troisième combinaison de noeuds de réseau est plus courte que la grandeur du chemin allant à la cible de réacheminement (EG3) en passant par la première combinaison de noeuds de réseau (NK11, NK21).

3. Procédé selon la revendication 1,
**caractérisé en ce que**,
au cas où la procédure de recherche de voies est exécutée dans le deuxième réseau de communication (KN2), le chemin à la cible de réacheminement (EG3) est établi vers la cible de réacheminement (EG3) par le biais de l'autre combinaison de noeuds de réseau (NK12, NK22).

4. Procédé selon la revendication 2,
**caractérisé en ce que**,
dans le cas où la procédure de recherche de voies est exécutée dans le deuxième réseau de communication (KN2), le chemin à la cible de réacheminement (EG3) est établi vers la cible de réacheminement (EG3) par le biais de la troisième combinaison de noeuds de réseau.

5. Procédé selon l'une quelconque des revendications précédentes,
**caractérisé en ce**
**que** la grandeur d'un chemin est déterminée par les taxes à échoir pour un chemin.

6. Procédé selon l'une quelconque des revendications précédentes,
**caractérisé en ce**
**que** la grandeur d'un chemin est déterminée par le nombre de noeuds de réseau qui sont traversés par un chemin.

7. Procédé selon l'une quelconque des revendications précédentes,
**caractérisé en ce**
**que** la grandeur d'un chemin est déterminée par la distance locale entre la cible de réacheminement et une combinaison de noeuds de réseau.
